# EUROPÄISCHE PATENTSCHRIFT

(11) **EP 2 702 860 B1**
(45) Veröffentlichungstag und Bekanntmachung des Hinweises auf die Patenterteilung: **20.12.2017**
(21) Anmeldenummer: 13170619.4
(22) Anmeldetag: 05.06.2013
(51) Int. Cl.: A01D 69/06

(54) **Selbstfahrende landwirtschaftliche Erntemaschine**
Self-propelled agricultural harvester
Moissonneuse agricole autonome

(30) Priorität: 29.08.2012 DE 102012107958
(43) Veröffentlichungstag der Anmeldung: 05.03.2014
(73) Patentinhaber: CLAAS Selbstfahrende Erntemaschinen GmbH, 33428 Harsewinkel (DE)
(72) Erfinder: Flöthmann, Sebastian, 33334 Gütersloh (DE); Tilly, Thomas, 48231 Warendorf (DE); Birkhofer, Stefan, 78333 Stocknach (DE)

(56) Entgegenhaltungen:
- EP-A2- 2 281 434
- DE-A1- 2 745 564
- DE-A1- 3 048 255
- US-A- 2 336 002
- US-A- 3 466 854
- US-A1- 2003 109 292

## Beschreibung

Die Erfindung betrifft einen selbstfahrenden Feldhäcksler gemäß dem Oberbegriff des Patentanspruchs 1.

Selbstfahrende Feldhäcksler können zur Ernte unterschiedlicher Arten von Feldfrüchten mit Erntevorsatzgeräten verschiedener Art ausgestattet werden. Das Erntevorsatzgerät dient dabei jeweils im Wesentlichen der Aufnahme und Förderung von Erntegut, während die eigentliche Verarbeitung, die Vorpressung, die Zerkleinerung ("Häckseln") und gegebenenfalls die Nachbearbeitung im Feldhäcksler selbst stattfinden.
Erntevorsatzgeräte sind in der Regel frontseitig an die Erntemaschine anbaubar und werden antriebsmäßig von dieser versorgt. Das heißt, dass die Antriebsleistung des Erntevorsatzgeräts in irgendeiner Form von einem Hauptantriebsmotor der Erntemaschine bereitgestellt wird. In bekannter Weise erfolgt dies beispielsweise mechanisch mittels einer maschinenseitig mittelbar vom Hauptmotor angetriebenen Gelenkwelle, die mit dem Erntevorsatzgerät über einen Wellenanschluss verbindbar ist.

Zur Anpassung an unterschiedliche Erntebedingungen, Fruchtarten, Vorfahrtgeschwindigkeiten oder ganz allgemein zur Verbesserung des Gutflusses wird angestrebt, das Erntevorsatzgerät mit veränderlicher Geschwindigkeit betreiben zu können. Im Stand der Technik bestehen dafür bei Feldhäckslern verschiedene Umsetzungsmöglichkeiten. Zum einen ist es bekannt, einen im Antriebsstrang der zuvor genannten (das Erntevorsatzgerät antreibenden) Gelenkwelle vorhandenen Riementrieb mit austauschbaren Riemenscheiben auszustatten. Durch einen Scheibentausch werden unterschiedliche Übersetzungsverhältnisse und folglich unterschiedliche Antriebsdrehzahlen des Erntevorsatzes erzielt. Der Montageaufwand für den Scheibentausch ist jedoch hoch und nicht im laufenden Erntebetrieb durchführbar. Zudem lassen sich nur durch die Riemenscheiben fest vorgegebene Übersetzungsverhältnisse erzielen. Einige dieser Nachteile ergeben sich auch bei der ebenfalls bekannten Verwendung eines Gang-Getriebes im Antriebsstrang der Gelenkwelle.

Daneben ist es bekannt, das Erntevorsatzgerät hydraulisch anzutreiben, wodurch sich mit entsprechender Ansteuerung der hydraulischen Komponenten eine variable Anpassungsmöglichkeit der Geschwindigkeit des Erntevorsatzes ergibt. Nachteilig daran ist der niedrige Wirkungsgrad. Aufgrund steigender Antriebsleistungen für anforderungsbedingt breiter werdende Vorsatzgeräte fällt dieser jedoch nachteilig ins Gewicht.

Aus der EP 2 281 434 A2 ist ein Antriebssystem für einen Erntevorsatz bekannt, das eine leistungsverzweigte Getriebeeinheit aufweist. Ein mechanischer Antriebsstrang mit hohem Wirkungsgrad stellt die Hauptantriebsleistung bereit, während ein durch die Getriebeeinheit damit gekoppelter hydraulischer Nebenantriebsstrang eine veränderliche Ausgangsdrehzahl für das Erntevorsatzgerät ermöglicht. Die zuvor genannten Nachteile sind damit weitestgehend behoben. Jedoch stellt ein derartiges Antriebssystem einen erheblichen konstruktiven Aufwand mit damit verbundenen Nachteilen dar. Vor dem Hintergrund des zuvor genannten Standes der Technik ist es eine Aufgabe der vorliegenden Erfindung, einen selbstfahrenden Feldhäcksler der genannten Art anzugeben, mit der sich konstruktiv einfach die Drehzahl eines daran anbaubaren Erntevorsatzgeräts auch unter Last auf komfortable Weise stufenlos verstellen lässt. Weiterhin soll die Möglichkeit eines sanften Anlaufs des Erntevorsatzgeräts geschaffen werden.

Die genannte Aufgabe wird gelöst durch einen selbstfahrenden Feldhäcksler mit den Merkmalen des Anspruchs 1. Erfindungsgemäß zeichnet sich diese dadurch aus, dass Eingangswelle gegenüber der Ausgangswelle in Antriebsverbindung bringbar und davon entkuppelbar ist, wobei die Antriebsverbindung ein zwischen Eingangswelle und Ausgangswelle wirkendes Variatorgetriebe umfasst.

Dabei ist zunächst erkannt worden, dass bisher bekannte Arten des Antriebs eines Erntevorsatzgeräts die bereits erläuterten Einschränkungen oder Nachteile aufweisen. Als eine vorteilhafte Lösung der gestellten Aufgabe wurde daraufhin der Einsatz einer kuppel- und entkuppelbaren Antriebsverbindung einschließlich eines Variatorgetriebes als wesentliche Bestandteile der Getriebeanordnung erachtet.

Demzufolge wird erfindungsgemäß eine das (anbaubare) Erntevorsatzgerät antreibende Antriebsleistung zunächst vom Antriebsmotor des Feldhäckslers bereitgestellt. Eine Getriebeanordnung, deren Eingangswelle vom Antriebsmotor antreibbar ist und deren abtriebsseitige Ausgangswelle mit dem Erntevorsatzgerät in Antriebsverbindung bringbar ist, dient zur Übertragung der Antriebsleistung an das Erntevorsatzgerät. Dabei ist erfindungsgemäß die Eingangswelle gegenüber der Ausgangswelle in Antriebsverbindung bringbar und davon entkuppelbar, was insbesondere durch eine Kupplung umsetzbar ist, die eine Antriebsverbindung zwischen der Eingangswelle und der Ausgangswelle herstellt oder löst.

Auf weiterhin erfindungsgemäße Weise umfasst die Antriebsverbindung ein zwischen Eingangs- und Ausgangswelle der Getriebeanordnung wirkendes Variatorgetriebe. Diese kann vorzugsweise mit der Eingangswelle kuppelbar und von dieser entkuppelbar ausgeführt sein. Vorteilhaft ergibt sich durch diese Merkmale zunächst die Möglichkeit, die Drehzahl der Ausgangswelle - und damit die Geschwindigkeit des Erntevorsatzgeräts - zumindest in einem gewissen Bereich stufenlos und während des laufenden Betriebs verändern zu können, indem das Variatorgetriebe auf ein gewünschtes Übersetzungsverhältnis eingestellt wird. Für die Praxis ist damit die Möglichkeit geschaffen, das Erntevorsatzgerät auch während des Erntebetriebs in der Geschwindigkeit an die jeweiligen Bedingungen anzupassen, eine entsprechende Ansteuerungsmöglichkeit des Variatorgetriebes vorausgesetzt. Dabei stellt ein Variatorgetriebe eine effiziente Möglichkeit (d.h. mit hohem Wirkungsgrad) dar, mechanische Leistung mit stufenlos während des Betriebs einstellbarer Drehzahl zu übertragen. Durch die weiterhin erfindungsgemäß vorgesehene Kuppelbarkeit (bzw. Entkuppelbarkeit) besteht zudem die Möglichkeit, die Antriebsverbindung zwischen Eingangs- und Ausgangswelle der Getriebeanordnung herzustellen oder zu unterbrechen. Ein sanfter Anlauf eines angebauten Erntevorsatzgeräts oder eine Antriebsunterbrechung (beispielsweise zur Unterbrechung des Erntevorgangs oder als Überlastschutz) sind damit möglich. Eine dabei zweckmäßigerweise zum Einsatz kommende Kupplung kann auf unterschiedliche Weise an der Getriebeanordnung angeordnet sein.

Gemäß einer vorteilhaften Weiterbildung der Erfindung ist die Kupplung so angeordnet, dass das Variatorgetriebe mittels der Kupplung gegenüber der Eingangswelle kuppelbar und von dieser entkuppelbar ist. Demzufolge ist die Kupplung dem Variatorgetriebe "antriebsseitig" vorgelagert, so dass das Variatorgetriebe nicht angetrieben wird, wenn die Kupplung geöffnet ist. Unnötige Reibungsverluste werden so vermieden. Alternativ ist es denkbar, die Kupplung "abtriebsseitig" dem Variatorgetriebe nachzulagern. In diesem Fall wäre beispielsweise das Variatorgetriebe stets in Antriebsverbindung mit der Eingangswelle. Die Ausgangswelle der Getriebeanordnung wäre jedoch mittels der dem Variatorgetriebe nachgelagerten Kupplung antriebsmäßig davon trennbar. Die letztere Variante könnte beispielsweise aus Gründen mangelnden Bauraums im Bereich der Eingangswelle vorteilhaft sein.

Vorzugsweise weist das Variatorgetriebe ein Antriebsrad mit veränderlichem Wirkdurchmesser, ein dazu achsparallel angeordnetes Abtriebsrad mit veränderlichem Wirkdurchmesser und ein Zugmittel auf, das die Räder am jeweiligen Wirkdurchmesser endlos umschlingt, um zwischen den Rädern eine Antriebsverbindung mit veränderlichem Drehzahlverhältnis herzustellen. Dieses ergibt sich durch das jeweils eingestellte Verhältnis der Wirkdurchmesser von Antriebsrad und Abtriebsrad, wobei als Wirkdurchmesser nicht der Durchmesser des Rads selbst, sondern der Durchmesser zu verstehen ist, unter dem das Zugmittel das jeweilige Rad umschlingt. Bei dem Zugmittel handelt es sich insbesondere um einen Zugriemen beispielsweise in Form eines Breitkeilriemens.

Gemäß einer kompakten Bauform der Erfindung ist das Antriebsrad der Eingangswelle der Getriebeanordnung zugeordnet und ist das Abtriebsrad der Ausgangswelle der Getriebeanordnung zugeordnet. Insbesondere können vorteilhaft das Antriebsrad und die Eingangswelle sowie das Abtriebsrad und die Ausgangswelle jeweils koaxial angeordnet sein. Damit ergibt sich der vorteilhafte Effekt, dass die gesamte Getriebeanordnung mit deren Funktionselementen durch zwei Achsen abgebildet wird.

Mit der zuvor genannten koaxialen Anordnung der Räder und Wellen lässt sich die Getriebeanordnung vorteilhaft weiterbilden, indem das Antriebsrad drehbar gegenüber der Eingangswelle gelagert ist, die Kupplung drehfest mit dem Antriebsrad verbunden ist und betätigbar ist, um in einem Kupplungszustand das Antriebsrad in Antriebsverbindung mit der Eingangswelle zu bringen, und in einem entkuppelten Zustand das Antriebsrad antriebsmäßig von der Eingangswelle zu lösen.

Grundsätzlich können für die Erfindung verschiedene Bauformen eines Variatorgetriebes zum Einsatz kommen. Gemäß einer konstruktiv bevorzugten Bauform umfasst dabei das Antriebsrad und das Abtriebsrad jeweils zwei kegelähnliche Körper, die koaxial mit einander zugewandten Spitzen angeordnet und relativ zueinander axial beweglich sind, derart dass deren Mantelflächen zumindest bereichsweise als Lauffläche für das Zugmittel dienen. Diese - für sich gesehen bekannte - Bauform eines Variatorgetriebes ermöglicht durch die relative axiale Beweglichkeit der kegelartigen Körper zueinander, dass das jeweilige Rad in dessen Wirkdurchmesser veränderlich ist. Die axiale Betätigung kann auf unterschiedliche Weise, beispielsweise hydraulisch erfolgen, wobei es zur Einstellung eines anderen Wirkdurchmessers ausreichend und konstruktiv zu bevorzugen ist, dass an einem Rad nur jeweils einer der kegelähnlichen Körper axial bewegt wird, während der jeweils andere Körper axial unbeweglich ist.

Eine besonders kompakte Bauform der Getriebeanordnung lässt sich erzielen, indem die Kupplung mit einem axial unbeweglichen Körper des Antriebsrads drehfest verbunden ist. Mit anderen Worten ist durch diese Maßnahme die Kupplung in das Antriebsrad integriert. Im Hinblick auf eine einfache Montierbarkeit kann auf diese Weise sogar vorgesehen sein, dass die Kupplung mit dem Antriebsrad als auf die Eingangswelle montierbare Baueinheit ausgeführt ist.

Erntevorsatzgeräte landwirtschaftlicher Erntemaschinen sollen in bestimmten Situationen, insbesondere in Gefahrensituationen, schnell zum Stillstand gebracht werden können. Eine vorteilhafte Weiterbildung der Erfindung sieht daher vor, dass der Ausgangswelle der Getriebeanordnung eine Bremse zugeordnet ist, die betreibbar ist, zumindest im entkuppelten Zustand die Ausgangswelle abzubremsen. Durch die Zuordnung der Bremse zur Ausgangswelle entsteht vorteilhaft eine ausgewogene Verteilung von Funktionselementen der Getriebeanordnung auf Eingangswelle (Kupplung) und Ausgangswelle (Bremse). Dabei lässt sich ein Stillstand der Ausgangswelle besonders schnell und sicher erzielen, indem nicht nur die Bremse mit höchster Bremskraft bremst, sondern in Zusammenwirkung zeitgleich die Kupplung geöffnet wird, um nämlich die Antriebsverbindung zum Antriebsmotor zu unterbrechen.

Verschiedene Bauformen und Anordnungen einer geeigneten Bremse sind denkbar. In konstruktiver Hinsicht umfasst die Bremse vorteilhaft einen drehfest mit dem Abtriebsrad verbundenen Reibkörper wie beispielsweise eine Scheibe (Scheibenbremse) und eine maschinenseitig angeordnete Bremseinrichtung, die betätigbar ist, um in einem Nicht-Bremszustand frei von Krafteinfluss auf den Reibkörper zu sein, und um in einem Bremszustand auf den Reibkörper eine der Drehbewegung der Ausgangswelle entgegenstehende Kraft auszuüben. Eine vorteilhafte Ausführungsform sieht vor, dass Elemente der Bremse, insbesondere deren Reibkörper mit Komponenten des Abtriebsrads verbunden oder als Baueinheit damit ausgeführt sind. Beispielsweise könnte eine Scheibe oder Trommel an einem der kegelartigen Körper des Abtriebsrads befestigt sein.

Alternativ könnte die Bremse auch an einem anderen Bereich der Ausgangswelle (abseits des Abtriebsrads) angeordnet sein, beispielsweise im Bereich der Leistungsübertragung (z.B. Winkelgetriebe) auf die Vorsatzantriebswelle für das Erntevorsatzgerät.

Eine für die Integration in einen Feldhäcksler zweckmäßige Bauform der Erfindung besteht darin, dass die Eingangswelle und die Ausgangswelle der Getriebeanordnung parallel zueinander angeordnet sind.

Dabei kann vorteilhaft die Antriebswelle der Häckseltrommel quer zur Maschinenlängsrichtung und durch das Arbeitsaggregat hindurch verlaufen, um auf einer ersten Maschinenseite (bezogen auf die Maschinenlängsmittelachse) antriebsmäßig mit dem Antriebsmotor verbindbar zu sein und um auf einer zweiten, gegenüberliegenden Maschinenseite (bezogen auf die Maschinenlängsmittelachse) die dort befindliche Getriebeanordnung anzutreiben. In Vorwärtsfahrtrichtung der Erntemaschine betrachtet, befindet sich demnach der Antrieb des Arbeitsaggregats auf der einen Seite des Arbeitsaggregats und die Getriebeanordnung auf der gegenüberliegenden Seite des Arbeitsaggregats, wodurch eine platz- und gewichtsoptimierte Verteilung von Antriebskomponenten erzielt wird.

Zu Wartungszwecken kann es zweckmäßig sein, dass die Ausgangswelle der Getriebeanordnung an einem Einzugsgehäuse der Erntemaschine gelagert ist, das um eine etwa vertikal verlaufende Schwenkachse seitlich schwenkbar mit einem Hauptrahmen der Erntemaschine verbunden ist. Durch bloßes Schwenken des Einzugsgehäuses aus einem Betriebs- in einen Wartungszustand kann so - bei geeigneter Anordnung der Achsen - auf einfache Weise das die An- und Abtriebsräder umschlingende Zugmittel des Variatorgetriebes entspannt und entfernt bzw. eingebaut werden.

Eine kompakt bauende und gewichtsmäßig ausgeglichene Weiterbildung der Erfindung sieht vor, dass die Ausgangswelle quer zur Maschinenlängsrichtung und durch das Einzugsgehäuse hindurch verläuft, um auf der ersten Maschinenseite antriebsmäßig mit dem Erntevorsatzgerät verbindbar zu sein und um auf der zweiten, gegenüberliegenden Maschinenseite das Abtriebsrad der Getriebeanordnung aufzunehmen. Demnach befindet sich eine Verbindungsstelle der Ausgangswelle mit dem anbaubaren Erntevorsatzgerät auf der gleichen Seite des Feldhäckslers wie der Antrieb des Arbeitsaggregats (Häckseltrommel).

Die Erfindung wird anhand der nachfolgenden Figuren anhand eines Ausführungsbeispiels näher erläutert. Dabei werden auch vorteilhafte Wirkungen und Ausgestaltungsmöglichkeiten erwähnt. In den Figuren zeigen:
- Fig. 1: eine schematische Seitenansicht eines selbstfahrenden Feldhäckslers,
- Fig. 2: eine perspektivische Teilansicht eines selbstfahrenden Feldhäckslers von schräg rechts vorn,
- Fig. 3: eine Prinzipdarstellung eines Antriebsstrangs eines selbstfahrenden Feldhäckslers im Schnitt von oben.

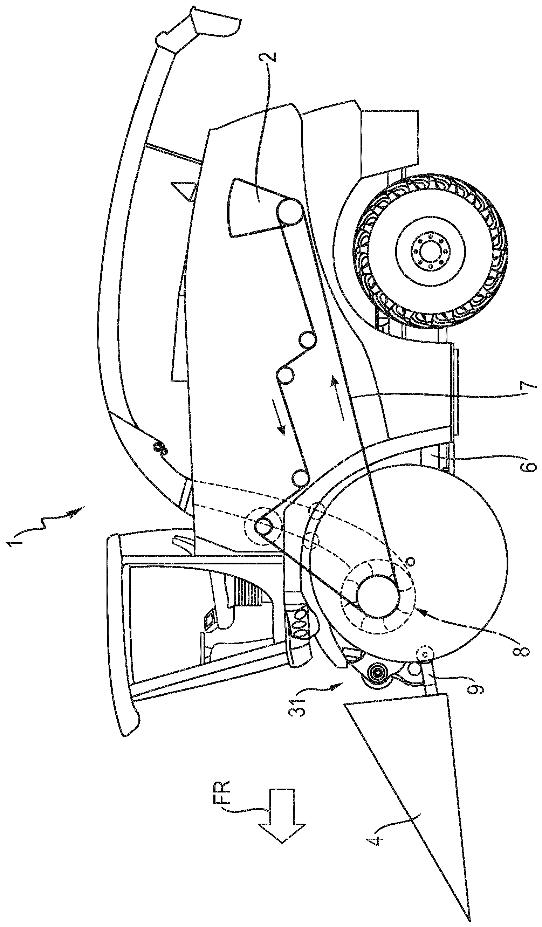

Fig. 1 zeigt in schematischer Seitenansicht (in Fahrtrichtung FR gesehen von links) eine selbstfahrende landwirtschaftliche Erntemaschine, die gemäß dem einzigen Ausführungsbeispiel der Erfindung als selbstfahrender Feldhäcksler 1 ausgebildet ist. Der Feldhäcksler 1 umfasst einen heckseitig angeordneten Antriebsmotor 2, der zum Antrieb verschiedener Aggregate dient. Insbesondere wird über einen endlos umlaufenden Hauptantriebsriemen 7 eine frontseitig unterhalb der Fahrerkabine (nicht näher bezeichnet) angeordnete Häckseltrommel 8 angetrieben, die auf für sich bekannte Weise zur Zerkleinerung und Förderung von Erntegut dient. Der Hauptantriebsriemen 7 treibt auf weiterhin bekannte Weise weitere (nicht näher bezeichnete) Aggregate des Feldhäckslers 1 an, wozu der Hauptantriebsriemen 7 jeweils den Arbeitsaggregaten zugehörige Riemenscheiben umschlingt. Der Hauptantriebsriemen 7 erstreckt sich bezogen auf die angezeigte Fahrtrichtung FR des Feldhäckslers 1 auf der linken Seite der Maschine. Auch die Häckseltrommel 8 wird somit auf deren linker Seite vom Antriebsmotor 2 angetrieben.

Der Feldhäcksler 1 baut auf einen Maschinenrahmen 6 auf. Frontseitig, bezogen auf die Vorwärtsfahrtrichtung FR des Feldhäckslers 1, befindet sich ein Einzugsgehäuse 31, an welches ein Erntevorsatzgerät 4 wie beispielsweise ein sogenanntes Maisgebiss, ein Maispflücker, eine Pickup, ein Ganzpflanzenschneidwerk, ein Holzschneidwerk oder dergleichen anbaubar ist. Das Erntevorsatzgerät 4 wird über eine Vorsatzantriebswelle 9 vom Feldhäcksler 1 in noch näher zu beschreibender Weise angetrieben.

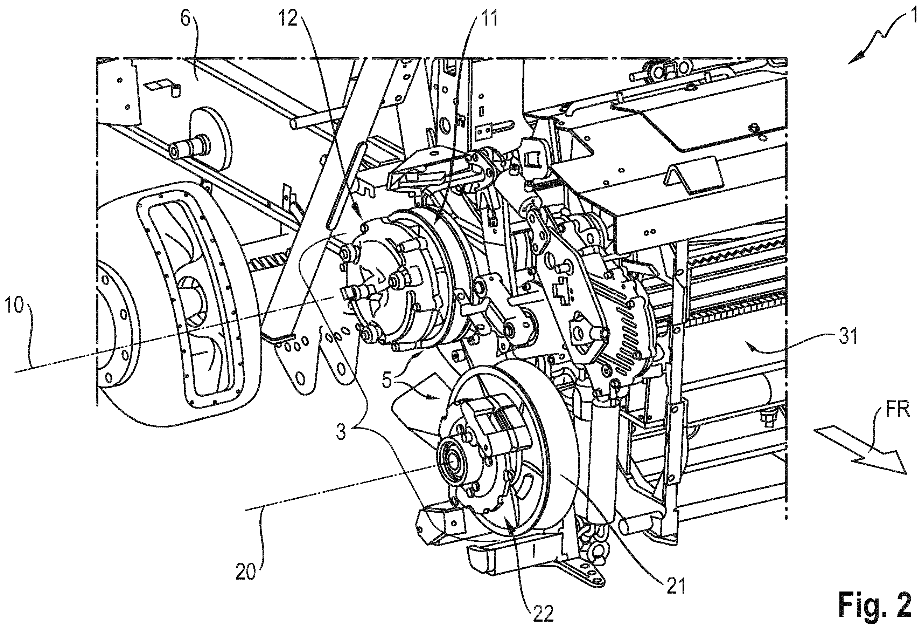

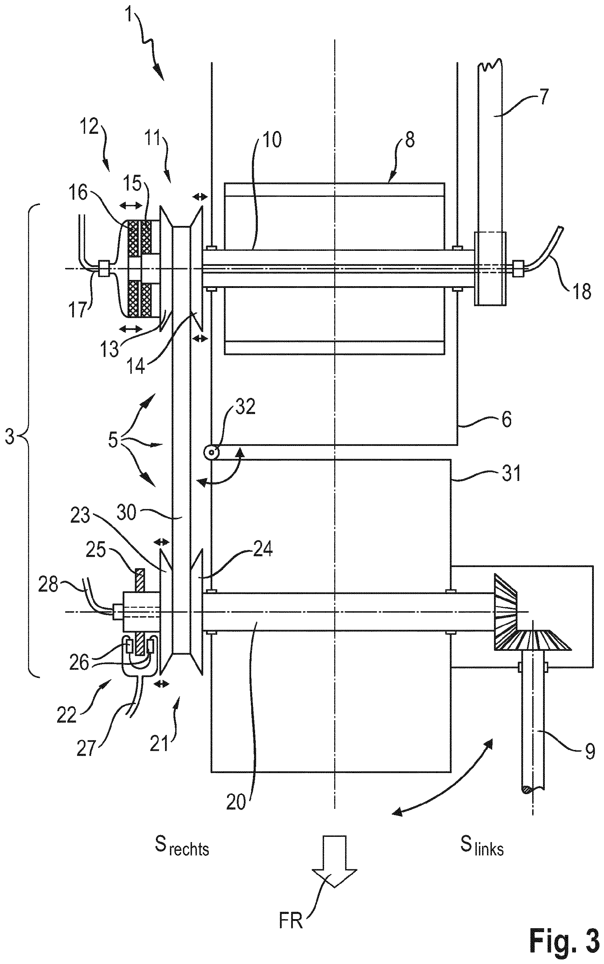

Zur Anpassung an unterschiedliche Ernte- und/oder Arbeitsbedingungen ist es wünschenswert, das Erntevorsatzgerät 4 mit veränderlicher Drehzahl anzutreiben. Dazu weist der Feldhäcksler 1 eine besondere Getriebeanordnung auf, deren Anordnung und Funktion an dem Feldhäcksler 1 anhand von Fig. 2 und 3 erläutert wird, da sich wesentliche Elemente der Getriebeanordnung auf der anderen (rechten), in Fig. 1 nicht sichtbaren Seite des Feldhäckslers befinden.

So zeigt Fig. 2 in perspektivischer Teildarstellung einen Feldhäcksler 1 wie aus Fig. 1 bekannt aus Sicht von schräg rechts vorn, wobei zur verbesserten Sichtbarkeit erfindungsgemäßer Merkmale einzelne Komponenten weggelassen wurden. Insbesondere ist das rechte Vorderrad entfernt worden. Auch ein Vorsatzgerät ist aus Darstellungszwecken nicht an den Feldhäcksler 1 angebaut.

Gemäß Fig. 2 weist der erfindungsgemäße Feldhäcksler 1 eine Getriebeanordnung 3 auf, die bezogen auf die Vorwärtsfahrtrichtung FR auf der rechten Maschinenseite, nämlich seitlich rechts neben der (hier verdeckten) Häckseltrommel und dem Einzugsgehäuse 31 angeordnet ist. Die Getriebeanordnung 3 umfasst als wesentliche Elemente eine Eingangswelle 10, welche mit der Antriebswelle der Häckseltrommel identisch ist und zusammen mit der Häckseltrommel angetrieben wird (vgl. Erläuterung zum Häckseltrommelantrieb zu Fig. 1), eine dazu parallele abtriebsseitige Ausgangswelle 20 sowie ein Variatorgetriebe 5, das über eine Kupplung 12 mit der Eingangswelle 10 kuppelbar und von dieser entkuppelbar ist. Das Variatorgetriebe 5 weist ein der Eingangswelle 10 zugeordnetes Antriebsrad 11, ein der Ausgangswelle 20 zugeordnetes Abtriebsrad 12 und einen - in Fig. 2 aus Darstellungszwecken nicht gezeigten - Riemen 30 (siehe Fig. 3) auf, der die Räder 11, 21 zur Herstellung einer Antriebsverbindung zwischen den Wellen 10 , 20 endlos umschlingt. Es handelt sich dabei vorzugsweise um einen Breitkeilriemen. Zur Erläuterung der näheren Funktionsweise der Getriebeanordnung 3 sei nun auf Fig. 3 verwiesen.

Fig. 3 zeigt in prinzipieller Darstellung den erfindungswesentlichen Teil eines Antriebsstrangs eines selbstfahrenden Feldhäckslers 1 im Schnitt von oben. Der vereinfacht dargestellte Antriebsstrang kann in einen Feldhäcksler 1 gemäß den Fig. 1 und 2 eingebaut sein. Es sei angemerkt, dass es sich um eine weder maßstäbliche noch vollständige Darstellung der Komponenten eines Feldhäckslers 1 handelt, sondern dass zu Erläuterungszwecken eine vereinfachte Darstellung gewählt wurde. Zur Orientierung ist in Fig. 3 wieder eine Vorwärtsfahrtrichtung FR (gleich Maschinenlängsrichtung) eingezeichnet. Die Maschinenmittellinie ist dazu kollinear als gestrichelte Linie eingezeichnet. Zusätzlich sind die Maschinenseiten S_{rechts} und Sₗᵢₙₖₛ benannt worden, welche einen Bereich rechtsseitig bzw. linksseitig der Maschinenmittellinie - bezogen auf die Vorwärtsfahrtrichtung FR bezeichnen.

Gemäß Fig. 3 weist der Feldhäcksler 1 einen Maschinenrahmen 6 auf, gegenüber dem ein Einzugsgehäuse 31 um eine vertikal verlaufende Schwenkachse 32 schwenkbar gelagert ist. Die Schwenkbewegbarkeit des Einzugsgehäuses 31 ist durch Doppelpfeile angedeutet; sie dient dazu das Einzugsgehäuse 31 zu Wartungs- bzw. Reinigungszwecken auf einfache Weise seitlich zu verklappen, um freien Zugang zur dahinter liegenden Häckseltrommel 8 zu haben. Die Häckseltrommel 8 ist auf einer Welle 10, welche mit der Eingangswelle der Getriebeanordnung 3 identisch ist, drehbar gegenüber dem Maschinenrahmen 6 gelagert. Auf der linken Maschinenseite Sₗᵢₙₖₛ wird die Welle 10 vom Hauptantriebsriemen 7 angetrieben, der wiederum mit dem (hier nicht gezeigten Antriebsmotor 2) in Antriebsverbindung bringbar ist.

Auf der dem Hauptantriebsriemen 7 gegenüberliegenden Maschinenseite S_{rechts} befindet sich die bereits zu Fig. 2 erwähnte Getriebeanordnung 3. Diese umfasst erfindungsgemäß ein mit der Eingangswelle 10 kuppelbares und von dieser entkuppelbares Variatorgetriebe 5. Dazu weist das Variatorgetriebe 5 ein der Eingangswelle 10 zugeordnetes Antriebsrad 11, ein dazu achsparallel angeordnetes Abtriebsrad 21 und einen Riemen 30 auf, der zwischen Antriebsrad 11 und Abtriebsrad 21 eine Antriebsverbindung herstellt. Auf für sich gesehen bekannte Weise weisen sowohl Antriebsrad 11 als auch Abtriebsrad 21 einen veränderlichen Wirkdurchmesser auf, indem das Antriebsrad 11 und das Abtriebsrad 21 jeweils zwei kegelähnliche (bezogen auf deren äußere Form) Körper 13, 14 bzw. 23, 24 umfasst, die koaxial mit einander zugewandten Spitzen angeordnet und relativ zueinander axial beweglich sind. Die Mantelflächen der Körper 13, 14 bzw. 23, 24 bilden zumindest bereichsweise eine Lauffläche für den umlaufenden Riemen 30. Im Fall des Antriebsrads 11 ist das Kegelrad 13 axial unbeweglich, während das Kegelrad 14 axial verschieblich ist. Die axiale Betätigung des Kegelrads 14 erfolgt hydraulisch, wozu durch die Eingangswelle 10 hindurch eine Ölzuführung eingearbeitet ist, die über die Ölleitung 18 versorgt wird.

Im Fall des Abtriebsrads 21 ist das Kegelrad 24 axial unbeweglich, während das Kegelrad 23 axial verschieblich ist. Die axiale Betätigung des Kegelrads 23 erfolgt ebenfalls hydraulisch, wozu durch die Ausgangswelle 20 hindurch eine Ölzuführung eingearbeitet ist, die über die Ölleitung 28 versorgt wird.

Abhängig vom jeweils eingestellten wirksamen Durchmesser der Räder 11, 21 besteht zwischen dem Antriebsrad 11 und dem Abtriebsrad 21 ein veränderliches Drehzahlverhältnis. Vorzugsweise erfolgt die Verstellung des Variatorgetriebes 5 ausgehend vom Antriebsrad 11, d.h. durch Verstellung des Kegelrads 14 über die Ölleitung 18. Die Verstellung des abtreibenden Kegelrads 23 wird durch die veränderte Umschlingung des Antriebsrads 11 erzwungen, wobei die Ölleitung 28 dazu dient, im Riemen 30 eine gewünschte Spannung aufrechtzuerhalten, also auf hydraulischem Wege - unabhängig von der jeweils eingestellten axialen Verschiebung (bzw. dem sich daraus ergebenden Drehzahlverhältnis) - eine gewünschte Riemenvorspannung zu erzielen. Diese kann beispielsweise vorteilhaft an die mit dem Riemen 30 zu übertragende Antriebsleistung angepasst werden, um bei Gewährleistung einer sicheren Drehmomentübertragung dessen Verschleiß gering zu halten.

Erfindungsgemäß ist die Eingangswelle 10 gegenüber der Ausgangswelle 20 in Antriebsverbindung bringbar und davon entkuppelbar, wobei die Antriebsverbindung ein zwischen Eingangswelle 10 und Ausgangswelle 20 wirkendes Variatorgetriebe 5 umfasst. Dazu ist das Antriebsrad 11 zunächst drehbar gegenüber der Eingangswelle 10 gelagert. Weiterhin ist mit dem Antriebsrad 11 eine Kupplung 12 drehfest verbunden, die sich zwischen einem Kupplungszustand und einem entkuppelten Zustand betätigen lässt. Im Kupplungszustand steht das Antriebsrad 11 in Antriebsverbindung mit der Eingangswelle 10. Im entkuppelten Zustand ist das Antriebsrad 11 antriebsmäßig von der Eingangswelle 10 gelöst und damit frei drehbar gegenüber dieser. Die Kupplung 12 kann unterschiedlicher Bauart sein, im gezeigten Ausführungsbeispiel handelt es sich um eine Trockenkupplung, die eine gegenüber der Eingangswelle 10 drehfeste Kupplungsscheibe 15 sowie einen gegenüber der Kupplungsscheibe 15 axial verschiebbaren Reibkörper 16 aufweist. Die Betätigung des Reibkörpers 16 erfolgt hydraulisch über eine Ölleitung 17. Die Kupplung 12, deren Gehäuse die Kupplungsscheibe 15 und den axial beweglichen Reibkörper 16 umschließt, ist mit dem Kegelkörper 13 des Antriebsrads 11 drehfest verbunden. Somit eignet sich die Kupplung 12 dazu, - in deren Kupplungszustand - Drehmoment von der Eingangswelle 10 auf das Antriebsrad 11 zu übertragen. Die Kupplung 12 ist im gezeigten Ausführungsbeispiel zusammen mit dem Antriebsrad 11 als eine Baueinheit ausgeführt und lässt sich so auf die Eingangswelle 10 montieren.

Eine vergleichbar kompakte Bauweise weist die der Ausgangswelle 20 zugeordnete Bremse 22 auf. Die Bremse 22, die im gezeigten Ausführungsbeispiel als Scheibenbremse ausgeführt ist, dient dazu, die Ausgangswelle 20 bei Bedarf abzubremsen, beispielsweise in einer Not-Situation, in der ein angebautes Erntevorsatzgerät 4 schnell zum Stillstand gebracht werden soll. Alternativ zu einer Scheibenbremse sind andere Bauformen einer Bremse denkbar, beispielsweise eine Band-, Backen-, Trommel- oder Lamellenbremse. Zur Erzielung einer möglichst hohen Bremswirkung trotz laufender Eingangswelle 10 ist es zweckmäßig, dass auch die Kupplung 12 geöffnet wird. Zur Erzielung ihrer Funktion weist die Bremse 22 einen drehfest mit dem Abtriebsrad 21 verbundenen Reibkörper in Form einer Bremsscheibe 25 sowie eine maschinenseitig angeordnete Bremseinrichtung in Form eines Bremssattels auf, der zwei der Bremsscheibe 25 gegenüberliegende Bremsbeläge 26 aufweist. Die Bremse 22, insbesondere deren Bremsbeläge 26 sind über eine Ölleitung 27 hydraulisch betätigbar, um in einem Nicht-Bremszustand frei von Krafteinfluss auf die Bremsscheibe 25 zu sein, und um in einem Bremszustand auf die Bremsscheibe 25 eine Bremskraft auszuüben, die einer Drehbewegung des Abtriebsrads 21 bzw. der damit drehfest verbundenen Ausgangswelle 20 entgegenwirkt.

Fig. 3 ist weiterhin zu entnehmen, dass die Ausgangswelle 20 gegenüber dem Einzugsgehäuse 31 des Feldhäckslers 1 gelagert ist und sich von der rechten Maschinenseite s_{rechts} durch das Einzugsgehäuse 31 hindurch auf die linke Maschinenseite Sₗᵢₙₖₛ erstreckt. Da das Einzugsgehäuse 31 zu Wartungs- und Reparaturzwecken um die vertikale Schwenkachse 32 seitlich schwenkbar ist (siehe Doppelpfeile), lässt sich in einem seitlich verschwenkten Wartungszustand (nicht gezeigt) des Einzugsgehäuses 31 der somit entspannte Riemen 30 auf verhältnismäßig einfache Weise von den Rädern 11, 12 werkzeuglos abnehmen oder auf diese aufziehen, beispielsweise zu Wartungs- oder Reparaturzwecken.

Schließlich zeigt Fig. 3, dass die Ausgangswelle 20 über ein Winkelgetriebe eine in Vorwärtsrichtung FR vom Feldhäcksler 1 abragende Vorsatzantriebswelle 9 antreibt. An diese Welle 9 lässt sich auf für sich gesehen bekannte und daher nicht näher zu erläuternde Weise ein Erntevorsatzgerät 4 antriebsmäßig anschließen.

Der beschriebene Feldhäcksler 1 erzielt verschiedene Vorteile. Auf verhältnismäßig engem Bauraum und bei geringem Gewicht wird ein Antrieb für ein anbaubares Erntevorsatzgerät bereitgestellt, womit unter Erzielung eines hohen Wirkungsgrades eine auch unter Last stufenlos verstellbare Antriebsgeschwindigkeit ermöglicht wird. Gleichzeitig ist der Antrieb mittels der vorgesehenen Kupplung zu- und abschaltbar, wobei durch entsprechende Betätigung vorteilhaft auch ein sanfter Anlauf des Erntevorsatzes möglich ist. Weiterhin wird durch die abtriebsseitig angeordnete Bremse eine Schnellstopfunktion geschaffen. Durch das hydraulisch vorspannbare Abtriebsrad kann der Riemen auch unabhängig von der Stellung des Variatorgetriebes auf einer gewünschten Spannung gehalten werden.

Es sei darauf hingewiesen, dass vom gezeigten Ausführungsbeispiel abweichende Ausgestaltungen im Rahmen der Erfindung liegen. Insbesondere ist eine abweichende Anordnung von Kupplung und Bremse denkbar. Beispielsweise könnte die Kupplung anstatt der Eingangswelle der Ausgangswelle der Getriebeanordnung zugeordnet sein, dem Variatorgetriebe also nachgelagert sein. Weiterhin könnte die Bremse alternativ zum beschriebenen Ausführungsbeispiel auf der gegenüberliegenden (ersten) Maschinenseite angeordnet sein, beispielsweise im Bereich einer in Fig. 3 gezeigten Getriebestufe (Winkelgetriebe) zwischen Ausgangswelle 20 und Vorsatzantriebswelle 9.

### Bezugszeichenliste

| | | | |
|---|---|---|---|
| 1 | Feldhäcksler | 30 | Riemen |
| 2 | Antriebsmotor | 31 | Einzugsgehäuse |
| 3 | Getriebeanordnung | 32 | Schwenkachse |
| 4 | Erntevorsatzgerät | | |
| 5 | Variatorgetriebe | Sₗᵢₙₖₛ | linke Maschinenseite |
| 6 | Maschinenrahmen | S_{rechts} | rechte Maschinenseite |
| 7 | Hauptantriebsriemen | FR | Maschinenlängsrichtung |
| 8 | Häckseltrommel | | |
| 9 | Vorsatzantriebswelle | | |
| 10 | Eingangswelle | | |
| 11 | Antriebsrad | | |
| 12 | Kupplung | | |
| 13 | Kegelrad (axial unbeweglich) | | |
| 14 | Kegelrad (axial verschieblich) | | |
| 15 | Kupplungsscheibe | | |
| 16 | Reibkörper | | |
| 17 | Ölleitung | | |
| 18 | Ölleitung | | |
| | | | |
| 20 | Ausgangswelle | | |
| 21 | Abtriebsrad | | |
| 22 | Bremse | | |
| 23 | Kegelrad (axial verschieblich) | | |
| 24 | Kegelrad (axial unbeweglich) | | |
| 25 | Bremsscheibe | | |
| 26 | Bremsbelag | | |
| 27 | Ölleitung | | |
| 28 | Ölleitung | | |

## Patentansprüche

1. Selbstfahrender Feldhäcksler (1), mit einem Antriebsmotor (2) und einer Getriebeanordnung (3), die eine von dem Antriebsmotor (2) antreibbare Eingangswelle (10), die als Antriebswelle einer Häckseltrommel (8) ausgeführt ist abtriebsseitig eine Ausgangswelle (20) aufweist, die mit einem an den Feldhäcksler (1) anbaubaren Erntevorsatzgerät (4) in Antriebsverbindung bringbar ist, um das Erntevorsatzgerät (4) anzutreiben,
**dadurch gekennzeichnet, dass** die Eingangswelle (10) gegenüber der Ausgangswelle (20) in Antriebsverbindung bringbar und davon entkuppelbar ist, wobei die Antriebsverbindung ein zwischen Eingangswelle (10) und Ausgangswelle (20) wirkendes Variatorgetriebe (5) umfasst.

2. Erntemaschine nach Anspruch 1, **dadurch gekennzeichnet, dass** das Variatorgetriebe (5) ein Antriebsrad (11) mit veränderlichem Wirkdurchmesser, ein dazu achsparallel angeordnetes Abtriebsrad (21) mit veränderlichem Wirkdurchmesser und ein Zugmittel (30) aufweist, das die Räder (11, 21) am jeweiligen Wirkdurchmesser endlos umschlingt, um zwischen den Rädern (11, 21) eine Antriebsverbindung mit veränderlichem Drehzahlverhältnis herzustellen.

3. Erntemaschine nach Anspruch 2, **dadurch gekennzeichnet, dass** das Antriebsrad (11) der Eingangswelle (10) der Getriebeanordnung (3) zugeordnet ist und das Abtriebsrad (21) der Ausgangswelle (20) der Getriebeanordnung (3) zugeordnet ist.

4. Erntemaschine nach einem der Ansprüche 1 bis 3, **dadurch gekennzeichnet, dass** das Variatorgetriebe (5) mittels einer Kupplung (12) gegenüber der Eingangswelle (10) kuppelbar und von dieser entkuppelbar ist.

5. Erntemaschine nach einem der Ansprüche 2 bis 4, **dadurch gekennzeichnet, dass** das Antriebsrad (11) drehbar gegenüber der Eingangswelle (10) gelagert ist, die Kupplung (12) drehfest mit dem Antriebsrad (11) verbunden ist und betätigbar ist, um
in einem Kupplungszustand das Antriebsrad (11) in Antriebsverbindung mit der Eingangswelle (10) zu bringen, und
in einem entkuppelten Zustand das Antriebsrad (11) antriebsmäßig von der Eingangswelle (10) zu lösen.

6. Erntemaschine nach einem der Ansprüche 2 bis 5, **dadurch gekennzeichnet, dass** das Antriebsrad (11) und das Abtriebsrad (21) jeweils zwei kegelähnliche Körper (13, 14, 23, 24) umfasst, die koaxial mit einander zugewandten Spitzen angeordnet und relativ zueinander axial beweglich sind, derart dass deren Mantelflächen zumindest bereichsweise als Lauffläche für das Zugmittel (30) dienen.

7. Erntemaschine nach einem der Ansprüche 4 bis 6, **dadurch gekennzeichnet, dass** die Kupplung (12) mit einem axial unbeweglichen Körper (13) des Antriebsrads (11) drehfest verbunden ist.

8. Erntemaschine nach einem der Ansprüche 4 bis 7, **dadurch gekennzeichnet, dass** die Kupplung (12) mit dem Antriebsrad (11) als auf die Eingangswelle (10) montierbare Baueinheit ausgeführt ist.

9. Erntemaschine nach einem der Ansprüche 1 bis 8, **dadurch gekennzeichnet, dass** der Ausgangswelle (20) eine Bremse (22) zugeordnet ist, die betreibbar ist, zumindest im entkuppelten Zustand die Ausgangswelle (20) abzubremsen.

10. Erntemaschine nach Anspruch 9, **dadurch gekennzeichnet, dass** die Bremse (22) einen drehfest mit dem Abtriebsrad (21) verbundenen Reibkörper (25) und eine maschinenseitig angeordnete Bremseinrichtung (26) umfasst, die betätigbar ist, um
in einem Nicht-Bremszustand frei von Krafteinfluss auf den Reibkörper (25) zu sein, und
in einem Bremszustand auf den Reibkörper (25) eine der Drehbewegung der Ausgangswelle (20) entgegenstehende Kraft auszuüben.

11. Erntemaschine nach einem der Ansprüche 1 bis 10, **dadurch gekennzeichnet, dass** die Eingangswelle (10) und die Ausgangswelle (20) der Getriebeanordnung (3) parallel zueinander angeordnet sind.

12. Erntemaschine nach einem der Ansprüche 1 bis 11, **dadurch gekennzeichnet, dass** die Antriebswelle (10) der Häckseltrommel (8) quer zur Maschinenlängsrichtung (FR) und durch die Häckseltrommel (8) hindurch verläuft, um auf einer ersten Maschinenseite (Sₗᵢₙₖₛ) antriebsmäßig mit dem Antriebsmotor (2) verbindbar zu sein und um auf einer zweiten, gegenüberliegenden Maschinenseite (S_{rechts}) die dort befindliche Getriebeanordnung (3) anzutreiben.

13. Erntemaschine nach einem der Ansprüche 1 bis 12, **dadurch gekennzeichnet, dass** die Ausgangswelle (20) der Getriebeanordnung (3) an einem Einzugsgehäuse (31) der Erntemaschine (1) gelagert ist, wobei das Einzugsgehäuse (31) um eine etwa vertikal verlaufende Schwenkachse (32) seitlich schwenkbar mit einem Hauptrahmen (6) der Erntemaschine (1) verbunden ist.

14. Erntemaschine nach einem der Ansprüche 1 bis 13, **dadurch gekennzeichnet, dass** die Ausgangswelle (20) quer zur Maschinenlängsrichtung (FR) und durch das Einzugsgehäuse (31) hindurch verläuft, um auf der ersten Maschinenseite (Sₗᵢₙₖₛ) antriebsmäßig mit dem Erntevorsatzgerät (4) verbindbar zu sein und um auf der zweiten, gegenüberliegenden Maschinenseite (S_{rechts}) das Abtriebsrad (21) der Getriebeanordnung (3) aufzunehmen.

## Claims

1. A self-propelled forage harvester (1) comprising a drive engine (2) and a transmission arrangement (3) which has an input shaft (10) which is drivable by the drive engine (2) and which is in the form of a drive shaft of a chopping drum (8), and at the drive output side an output shaft which can be brought into driving relationship with a front-mounted harvesting attachment (4) which can be mounted to the forage harvester (1), to drive the front-mounted harvesting attachment (4), **characterised in that** the input shaft (10) can be brought into driving relationship with respect to the output shaft (20) and can be uncoupled therefrom, wherein the driving relationship includes a continuously variable transmission (5) acting between the input shaft (10) and the output shaft (20).

2. A harvester according to claim 1 **characterised in that** the continuously variable transmission (5) has a drive wheel (11) of variable operative diameter, a drive output wheel (21) which is arranged in axis-parallel relationship therewith and has a variable operative diameter, and a traction means (30) which passes endlessly around the wheels (11, 21) at the respective operative diameter to produce a drive connection of variable speed ratio between the wheels (11, 21).

3. A harvester according to claim 2 **characterised in that** the drive wheel (11) is associated with the input shaft (10) of the transmission arrangement (3) and the drive output wheel (21) is associated with the output shaft (30) of the drive arrangement (3).

4. A harvester according to one of claims 1 to 3 **characterised in that** the continuously variable transmission (5) can be coupled to and uncoupled from the input shaft (10) by means of a clutch (12).

5. A harvester according to one of claims 2 to 4 **characterised in that** the drive wheel (11) is mounted rotatably with respect to the input shaft (10), the clutch (12) is connected non-rotatably to the drive wheel (11) and is actuable
to bring the drive wheel (11) into driving relationship with the input shaft (10) in a coupled state, and
to drivingly disengage the drive wheel (11) from the input shaft (10) in the uncoupled state.

6. A harvester according to one of claims 2 to 5 **characterised in that** the drive wheel (11) and the drive output wheel (21) respectively include two cone-like bodes (13, 14, 23, 24) which are arranged coaxially with mutually facing apexes and are moveable axially relative to each other in such a way that the peripheral surfaces thereof serve at least region-wise as a running surface for the traction means (30).

7. A harvester according to one of claims 4 to 6 **characterised in that** the clutch (12) is non-rotatably connected to an axially immovable body (13) of the drive wheel (11).

8. A harvester according to one of claims 4 to 7 **characterised in that** the clutch (12) with the drive wheel (11) is in the form of a unit which can be mounted on the input shaft (10).

9. A harvester according to one of claims 1 to 8 **characterised in that** associated with the output shaft (20) is a brake (22) operable to brake the output shaft (20) at least in the uncoupled state.

10. A harvester according to claim 9 **characterised in that** the brake (22) includes a friction member (25) non-rotatably connected to the drive output wheel (21) and a braking device (26) which is arranged at the machine side and which is operable
in a non-braking state to be free of a flow of force to the friction member (25), and
in a braking state to exert on the friction member (25) a force opposing the rotary movement of the output shaft (20).

11. A harvester according to one of claims 1 to 10 **characterised in that** the input shaft (10) and the output shaft (20) of the transmission arrangement (3) are arranged parallel to each other.

12. A harvester according to one of claims 1 to 11 **characterised in that** the drive shaft (11) of the chopping drum (8) extends transversely relative to the longitudinal direction of the machine (FR) and through the chopping drum (8) to be connectable in driving relationship to the drive engine (2) on a first machine side (Sₗᵢₙₖₛ) and to drive on a second opposite machine side (S_{rechts}) the transmission arrangement (3) which is disposed there.

13. A harvester according to one of claims 1 to 12 **characterised in that** the output shaft (20) of the transmission arrangement (3) is mounted at an intake housing (31) of the harvester (1), wherein the intake housing (31) is connected to a main frame (6) of the harvester (1) pivotably laterally about an approximately vertically extending pivot axis (32).

14. A harvester according to one of claims 1 to 13 **characterised in that** the output shaft (20) extends transversely relative to the longitudinal direction of the machine (FR) and through the intake housing (31) to be connectable drivingly to the front-mounted harvesting attachment (4) on the first machine side (Sₗᵢₙₖₛ) and to receive the drive output wheel (21) of the transmission arrangement (3) on the second opposite machine side (S_{rechts}).

## Revendications

1. Ensileuse automotrice (1) comprenant un moteur d'entraînement (2) et un agencement de transmission (3) qui comporte un arbre d'entrée (10) entraînable par un moteur d'entraînement (2) et conformé en arbre d'entraînement d'un rotor de hachage (8), côté mené un arbre de sortie (20) qui peut être amené en liaison d'entraînement avec un outil frontal de récolte (4) rapportable sur l'ensileuse (1) afin d'entraîner l'outil frontal de récolte (4), **caractérisée en ce que** l'arbre d'entrée (10) peut être amené en liaison d'entraînement avec l'arbre de sortie (20) et en être désaccouplé, la liaison d'entraînement comprenant un variateur (5) agissant entre l'arbre d'entrée (10) et l'arbre de sortie (20).

2. Machine de récolte selon la revendication 1, **caractérisée en ce que** le variateur (5) comprend une roue menante (11) à diamètre utile variable, une roue menée (21) à diamètre utile variable disposée parallèle axialement, et un moyen de traction (30) qui entoure les roues (11, 21) sans fin au niveau de leur diamètre utile respectif afin d'établir entre les roues (11, 21) une liaison d'entraînement à rapport de vitesse de rotation variable.

3. Machine de récolte selon la revendication 2, **caractérisée en ce que** la roue menante (11) est associée à l'arbre d'entrée (10) de l'agencement de transmission (3), et la roue menée (21) est associée à l'arbre de sortie (20) de l'agencement de transmission (3).

4. Machine de récolte selon une des revendications 1 à 3, **caractérisée en ce que** le variateur (5) est accouplable à l'arbre d'entrée (10) et en est désaccouplable au moyen d'un accouplement (12).

5. Machine de récolte selon une des revendications 2 à 4, **caractérisée en ce que** la roue menante (11) est montée à rotation par rapport à l'arbre d'entrée (10), l'accouplement (12) étant solidarisé en rotation à la roue menante (11) et étant exploitable pour amener la roue menante (11) en liaison d'entraînement avec l'arbre d'entrée (10) dans un état accouplé et pour dissocier la roue menante (11) de l'arbre d'entrée (10) en termes d'entraînement dans un état désaccouplé.

6. Machine de récolte selon une des revendications 2 à 5, **caractérisée en ce que** la roue menante (11) et la roue menée (21) comportent chacune deux corps coniques (13, 14, 23, 24) qui sont disposés coaxialement avec leurs pointes tournées l'une vers l'autre et sont déplaçables axialement l'un par rapport à l'autre, de façon que leurs surfaces latérales servent au moins par endroits de surface de roulement pour le moyen de traction (30).

7. Machine de récolte selon une des revendications 4 à 6, **caractérisée en ce que** l'accouplement (12) est solidarisé en rotation à un corps fixe axialement (13) de la roue menante (11).

8. Machine de récolte selon une des revendications 4 à 7, **caractérisée en ce que** l'accouplement (12) avec la roue menante (11) est conformé en unité structurelle montable sur l'arbre d'entrée (10).

9. Machine de récolte selon une des revendications 1 à 8, **caractérisée en ce qu'**à l'arbre de sortie (20) est associé un frein (22) qui est exploitable pour freiner l'arbre de sortie (20) au moins à l'état désaccouplé.

10. Machine de récolte selon la revendication 9, **caractérisée en ce que** le frein (22) comprend un corps de friction (25), solidarisé en rotation à la roue menée (21), et un équipement de freinage (26) disposé côté machine et exploitable pour ne pas exercer de force sur le corps de friction (25) dans un état de non freinage et pour exercer sur le corps de friction (25) une force opposée au mouvement de rotation de l'arbre de sortie (20) dans un état de freinage.

11. Machine de récolte selon une des revendications 1 à 10, **caractérisée en ce que** l'arbre d'entrée (10) et l'arbre de sortie (20) de l'agencement de transmission (3) sont disposés parallèlement l'un à l'autre.

12. Machine de récolte selon une des revendications 1 à 11, **caractérisée en ce que** l'arbre d'entraînement (10) du rotor de hachage (8) s'étend transversalement à la direction longitudinale de machine (FR) et à travers le rotor de hachage (8) pour pouvoir être relié en entraînement au moteur d'entraînement (2) sur un premier côté de machine (Sₗᵢₙₖₛ) et pour entraîner, sur un second côté de machine opposé (S_{rechts}), l'agencement de transmission (3) qui s'y trouve.

13. Machine de récolte selon une des revendications 1 à 12, **caractérisée en ce que** l'arbre de sortie (20) de l'agencement de transmission (3) est monté sur un carter d'alimentation (31) de la machine de récolte (1), le carter d'alimentation (31) étant relié à un châssis principal (6) de la machine de récolte (1) avec une possibilité de pivotement latéral autour d'un axe de pivotement (32) s'étendant sensiblement verticalement.

14. Machine de récolte selon une des revendications 1 à 13, **caractérisée en ce que** l'arbre de sortie (20) s'étend transversalement à la direction longitudinale de machine (FR) et à travers le carter d'alimentation (31) pour pouvoir être relié en entraînement à l'outil frontal de récolte (4) sur le premier côté de machine (Sₗᵢₙₖₛ) et pour recevoir, sur le second côté de machine opposé (S_{rechts}), la roue menée (21) de l'agencement de transmission (3).
